# EUROPÄISCHE PATENTANMELDUNG

(11) **EP 3 957 799 A1**
(43) Veröffentlichungstag der Anmeldung: **23.02.2022**
(21) Anmeldenummer: 21191199.5
(22) Anmeldetag: 13.08.2021
(51) Int. Cl.: E03C 1/00, E03C 1/12, E03C 1/16, B63B 29/00, A47K 1/02, E03B 7/02, E03B 9/20, E03B 11/10

(54) **MOBILES HANDWASCHSYSTEM**

(30) Priorität: 20.08.2020 DE 102020121848
(71) Anmelder: Illinois Tool Works, Inc., Glenview, Illinois 60025 (US)
(72) Erfinder: FIRCHAU, Dennis, Glenview, Illinois 60025 (US); JUNKER, Marco, Glenview, Illinois 60025 (US)
(74) Vertreter: Trinks, Ole

(57) **Zusammenfassung**

Die Erfindung betrifft ein mobiles Handwaschsystem (1), welches eine freistehende Versorgungsstation (2) mindestens eine freistehende Handwaschstation (3) aufweist. Die Versorgungsstation (2) weist einen Frischwassertank (4) auf, der über eine erste Frischwasserzufuhrleitung (5) strömungsmäßig mit der mindestens einen Handwaschstation (3) verbunden oder verbindbar ist, und der über eine zweite Frischwasserzufuhrleitung (6) strömungsmäßig mit einem Frischwasserversorgungssystem verbunden oder verbindbar ist. Die Versorgungsstation (2) weist einen Abwasser- oder Grauwassertank (7) und/oder eine Abwasserpumpe (23) auf, der bzw. die über eine erste Abwasserleitung (8) strömungsmäßig mit der mindestens einen Handwaschstation (3) verbunden oder verbindbar ist, und der bzw. die über eine zweite Abwasserleitung (9) strömungsmäßig mit einem Abwasser-Entsorgungs-oder Abwasser-Aufbereitungssystem verbunden oder verbindbar ist.

## Beschreibung

Die vorliegende Erfindung betrifft allgemein mobile Reinigungsstationen, die insbesondere zum Waschen von Händen geeignet sind. Im Einzelnen betrifft die Erfindung ein mobiles Handwaschsystem, welches mindestens eine freistehende Handwaschstation und insbesondere eine flexibel wählbare Anzahl an freistehenden Handwaschstationen aufweist.

Die Europäische Union (EU) ist dazu verpflichtet, den Schutz der Gesundheit ihrer Bürgerinnen und Bürger in allen Bereichen zu berücksichtigen und zusammen mit den EU-Ländern die öffentliche Gesundheit zu verbessern, Krankheiten vorzubeugen und Gefahrenquellen für die physische und psychische Gesundheit zu begrenzen. Dabei legt das EU-Gesundheitsprogramm die Strategie zur Gewährleistung guter Gesundheit und medizinischer Versorgung fest.

Die Rechtsgrundlage für das am Anmeldetag der vorliegenden Erfindung laufende EU-Gesundheitsprogramm ist die Verordnung (EU) Nr. 282/2014. Dabei verfolgt das Programm insbesondere das spezifische Ziel, Bürgerinnen und Bürger vor schwerwiegenden grenzübergreifenden Gesundheitsgefahren zu schützen.

Insbesondere ist eine Umsetzung dieses sogenannten Dritten Programms "Gesundheit" (2014-2020) bei der Kreuzfahrtindustrie derzeit nicht oder zumindest nicht mit erhöhtem Aufwand realisierbar.

Als "Kreuzfahrt" im Sinne der vorliegenden Anmeldung ist eine Urlaubsreise auf einem Kreuzfahrtschiff zu verstehen, wobei diese Urlaubsreise entlang einer festgelegten Route zwischen verschiedenen touristischen Zielen und Häfen erfolgt. Dabei sind es insbesondere die unterschiedlichen touristischen Ziele und Häfen, welche eine Kreuzfahrt als Urlaubsreise auf einem Kreuzfahrtschiff für Urlauber attraktiv machen.

Derartige Kreuzfahrten waren bis zum Ausbruch der COVID-19-Pandemie zu Beginn des Jahres 2020 bei Reisenden populär. Allerdings brachen im März 2020 weltweit Reiseveranstalter ihre Kreuzfahrten ab, da insbesondere aufgrund der Vielzahl an Zwischenstopps an den verschiedenen touristischen Zielen und Häfen nicht mehr sichergestellt werden konnte, dass die Reisenden vor schwerwiegenden grenzübergreifenden Gesundheitsgefahren entsprechend geschützt sind. Dies liegt insbesondere auch daran, dass an den von den Kreuzfahrtschiffen angesteuerten touristischen Zielen und Häfen häufig keine optimalen hygienischen und gesundheitlichen Bedingungen vorliegen.

Die Arbeitsgruppe "Healthy Gateways" der Europäischen Union (EU) veröffentlichte am 30. Juni 2020 vorläufige Empfehlungen für die Wiederaufnahme des Kreuzfahrtbetriebs. Darauf legte die "Cruise Lines International Organization" ihre "Leitsätze zur Wiederaufnahme des Kreuzfahrtbetriebs" vor, die sich auf ein detailliertes Hygienekonzept, die Personalschulung und auf Maßnahmen beim Umgang mit infizierten oder infektionsverdächtigten Personen an Bord beschäftigen.

Das detaillierte Hygienekonzept sieht in diesem Zusammenhang insbesondere vor, dass Passagiere nach einem Landgang und bevor diese das Kreuzfahrtschiff wieder betreten, sich ausreichend zumindest die Hände waschen, da bekannter Weise die Hände die häufigsten Überträger von Krankheitserregern sind. Auf diese Weise soll eine Übertragung von Krankheitserregern infolge einer Schmierinfektion unterbunden werden.

Allerdings ist es mit den derzeit verfügbaren und bekannten Ansätzen nicht oder zumindest nicht ohne äußerst aufwändige Maßnahmen möglich, Passagieren nach einem Landgang und bevor diese wieder das Kreuzfahrtschiff betreten, ein geeignetes hygienemäßiges Händewaschen zu ermöglichen.

Zwar ist beispielsweise aus der Druckschrift DE 20 2020 101 660 U1 eine mobile Reinigungsstation bekannt, die insbesondere zum Waschen von Händen geeignet ist. Allerdings ist eine solche mobile Reinigungsstation in der Praxis und insbesondere im Kreuzfahrtgeschäft nicht wirklich einsetzbar, da aufgrund der nur begrenzten Liegezeit der Kreuzfahrtschiffe an den entsprechenden touristischen Zielen und Häfen der Auf- und Abbau einer Vielzahl solcher mobiler Reinigungsstationen beispielsweise auf der Pier des Kreuzfahrtschiffs in der Praxis nicht umsetzbar ist.

Auf Grundlage dieser Problemstellung liegt der Erfindung die Aufgabe zugrunde, ein neuartiges Handwaschsystem, insbesondere mobiles Handwaschsystem, anzugeben, welches in kürzester Zeit auf- und abgebaut werden kann, und welches insbesondere autark von einem örtlichen Frischwassernetz und einem örtlichen Abwassernetz funktioniert, wobei gleichzeitig die Übertragung von Krankheitserregern insbesondere infolge einer Schmierinfektion wirksam verhindert werden kann.

Zur Lösung dieser Aufgabe wird erfindungsgemäß ein mobiles Handwaschsystem gemäß dem unabhängigen Patentanspruch 1 angegeben, wobei vorteilhafte Weiterbildungen des erfindungsgemäßen mobilen Handwaschsystems in den entsprechenden abhängigen Patentansprüchen angegeben sind.

Demgemäß betrifft die Erfindung insbesondere ein mobiles Handwaschsystem, welches eine freistehende Versorgungsstation sowie mindestens eine freistehende Handwaschstation aufweist. Die freistehende Versorgungsstation sowie die mindestens eine freistehende Handwaschstation sind ausgebildet, extern des Kreuzfahrtschiffs beispielsweise an der Pier des Kreuzfahrtschiffs aufgebaut zu werden.

Erfindungsgemäß weist die Versorgungsstation einen Frischwassertank auf, der über eine erste Frischwasserzufuhrleitung strömungsmäßig mit der mindestens einen Handwaschstation verbunden oder verbindbar ist, und der über eine zweite Frischwasserzufuhrleitung strömungsmäßig mit einem Frischwasserversorgungssystem verbunden oder verbindbar ist.

Bei dem Frischwasserversorgungssystem handelt es sich insbesondere um ein Frischwasserversorgungssystem, welches getrennt von einem öffentlichen Frischwassernetz ausgeführt ist. Beispielsweise handelt es sich bei dem Frischwasserversorgungssystem um ein bordinternes Trinkwasserversorgungssystem eines Schiffs, insbesondere Kreuzfahrtschiffs.

Erfindungsgemäß weist die Versorgungsstation des erfindungsgemäßen mobilen Handwaschsystems ferner einen Abwasser- oder Grauwassertank und/oder eine Abwasserpumpe auf, der bzw. die über eine erste Abwasserleitung strömungsmäßig mit der mindestens einen (freistehenden) Handwaschstation verbunden oder verbindbar ist, und der bzw. die über eine zweite Abwasserleitung strömungsmäßig mit einem Abwasser-Entsorgungs- oder Abwasser-Aufbereitungssystem verbunden oder verbindbar ist.

Bei dem Abwasser-Entsorgungs- oder Abwasser-Aufbereitungssystem handelt es sich insbesondere um ein von dem öffentlichen Abwassernetz getrenntes Abwasser-Entsorgungs- oder Abwasser-Aufbereitungssystem, wobei das Abwasser-Entsorgungs- oder Abwasser-Aufbereitungssystem insbesondere ein bordinternes Abwasser-Entsorgungs- oder Abwasser-Aufbereitungssystem eines Schiffs, insbesondere Kreuzfahrtschiffs, ist.

Die mit dem erfindungsgemäßen mobilen Handwaschsystem erzielbaren Vorteile liegen auf der Hand: indem im Unterschied beispielsweise zu der aus der Druckschrift DE 20 2020 101 660 U1 bekannten mobilen Reinigungsstation bei dem erfindungsgemäßen mobilen Handwaschsystem eine freistehende Versorgungsstation sowie mindestens eine freistehende Handwaschstation zum Einsatz kommen, ist es möglich, die freistehenden Handwaschstationen ohne Frischwassertank und Abwasser- oder Grauwassertank auszuführen. Dies bringt den entscheidenden Vorteil mit sich, dass die freistehenden Handwaschstationen besonders kompakt ausführbar sind, so dass diese freistehenden Handwaschstationen insbesondere als leicht handhabbare, mobile Einheiten ausgeführt werden können.

Vorzugsweise ist es in diesem Zusammenhang insbesondere denkbar, dass die freistehenden Handwaschstationen beispielsweise mit Rollen oder Rädern, insbesondere Schwerlastrollen oder Schwerlasträdern versehen sind, damit diese manuell und vorzugsweise nur von einer einzigen Person zum Aufstellungsplatz beispielsweise auf der Pier des Kreuzfahrtschiffs, befördert und wieder entsprechend abtransportiert werden können.

Insbesondere ist bei der erfindungsgemäßen Lösung vorgesehen, dass alle zur Frischwasserversorgung und Abwasserentsorgung der freistehenden Handwaschstationen notwendigen strukturellen Komponenten nicht in der Handwaschstation selber, sondern in der freistehenden Versorgungsstation integriert sind. Dies betrifft insbesondere den Frischwassertank, der in der Versorgungsstation vorgesehen ist, und der zur Frischwasserversorgung der freistehenden Handwaschstationen dient.

Weiter sei in diesem Zusammenhang der Abwasser- oder Grauwassertank genannt, der in der Versorgungsstation selber vorgesehen ist (und nicht in den entsprechenden freistehenden Handwaschstationen), und der dazu dient, das beim Gebrauch der freistehenden Handwaschstationen anfallende Abwasser bzw. Grauwasser zwischenzuspeichern.

Die erfindungsgemäße Lösung zeichnet sich insbesondere aber auch darin aus, dass die Versorgungsstation nicht zwangsläufig mit einem örtlichen Frischwasser- oder Abwassernetz verbunden werden muss. Vielmehr ist die Versorgungsstation des erfindungsgemäßen mobilen Handwaschsystems über eine entsprechende Frischwasserzufuhrleitung (zweite Frischwasserzufuhrleitung) strömungsmäßig mit einem Frischwasserversorgungssystem verbunden oder verbindbar, wobei es sich hierbei insbesondere nicht um ein örtliches Frischwassernetz, sondern insbesondere um ein bordinternes Frischwasserversorgungsystem handelt.

Gleiches gilt für die Abwasserentsorgung: bei dem erfindungsgemäßen mobilen Handwaschsystem ist vorgesehen, dass die freistehende Versorgungsstation über eine entsprechende Abwasserleitung (zweite Abwasserleitung) strömungsmäßig mit einem Abwasser-Entsorgungs- oder Abwasser-Aufbereitungssystem verbunden oder verbindbar ist, wobei es sich bei diesem Abwasser-Entsorgungs- oder Abwasser-Aufbereitungssystem insbesondere nicht um ein örtliches Abwassernetz handeln muss; vielmehr handelt es sich bei diesem Abwasser-Entsorgungs- oder Abwasser-Aufbereitungssystem insbesondere um ein bordinternes Abwasser-Entsorgungs- oder Abwasser-Aufbereitungssystem.

Mit anderen Worten, das mobile Handwaschsystem ist - im Hinblick auf die örtliche Infrastruktur - vollkommen autark ausgebildet. Gleichzeitig sind die einzelnen Komponenten des mobilen Handwaschsystems derart kompakt und gewichtsmäßig optimal ausgestaltet, dass diese als mobile Einheiten ohne größeren Aufwand und insbesondere auch manuell vor Ort, d.h. beispielsweise auf der Pier des Kreuzfahrtschiffs, aufgestellt und abgebaut werden können. Auf diese Weise kann das mobile Handwaschsystem ohne erhöhten personellen Aufwand und ohne Inanspruchnahme einer übermäßigen Zeitperiode auf- und abgebaut werden.

Vorzugsweise sind bei dem erfindungsgemäßen mobilen Handwaschsystem mindestens zwei freistehende Handwaschstationen vorgesehen. Insbesondere sind eine flexibel wählbare Anzahl an entsprechenden Handwaschstationen vorgesehen.

Diese mindestens zwei Handwaschstationen sind strömungsmäßig derart in Reihe geschaltet, dass eine erste der mindestens zwei Handwaschstationen über die erste Frischwasserzufuhrleitung direkt mit dem Frischwassertank der Versorgungsstation verbunden oder verbindbar ist, und dass eine zweite der mindestens zwei Handwaschstationen über eine dritte Frischwasserzufuhrleitung mit der ersten der mindestens zwei Handwaschstationen und von dort über die erste Frischwasserzufuhrleitung mit dem Frischwassertank der Versorgungsstation strömungsmäßig verbunden oder verbindbar ist.

Durch eine derartige Reihenschaltung im hydraulischen Sinne kann eine Vielzahl an freistehenden Handwaschstationen an der (freistehenden) Versorgungsstation angeschlossen werden, ohne dass hierzu ein übermäßiger Aufwand bei dem fluidtechnischen Anschließen der einzelnen Handwaschstationen anfällt.

Gemäß Weiterbildungen des zuletzt genannten Aspekts ist insbesondere vorgesehen, dass jede Handwaschstation einen ersten Leitungsanschluss für die erste oder eine dritte Frischwasserzufuhrleitung und einen (von dem ersten Leitungsanschluss separat ausgeführten) zweiten Leitungsanschluss für eine dritte Frischwasserzufuhrleitung aufweist. Das Vorsehen von zwei Leitungsanschlüssen für entsprechende Frischwasserzufuhrleitungen ist eine insbesondere leicht zu realisierende aber dennoch effektive Art und Weise, eine fluidtechnische Reihenschaltung der einzelnen Handwaschstationen zu realisieren.

In diesem Zusammenhang ist insbesondere vorgesehen, dass jedem Leitungsanschluss vorzugsweise eine Verschlusssicherung in Gestalt eines Rückflussverhinderers zugeordnet ist zum vorzugsweise selbsttätigen Schließen (beispielsweise mit Hilfe eines Rückschlagventils) oder zum manuellen Schließen (beispielsweise mit Hilfe eines Kugelhahns) des entsprechenden Leitungsanschlusses, wenn keine Frischwasserzufuhrleitung an dem entsprechenden Leitungsanschluss angeschlossen ist.

Gemäß bevorzugten Realisierungen bzw. Weiterbildungen des zuletzt genannten Aspekts ist vorgesehen, dass der erste Leitungsanschluss über eine vorzugsweise in der Handwaschstation integrierte, erste Frischwasser-Verbindungsleitung mit dem zweiten Leitungsanschluss strömungsmäßig verbunden ist. Andererseits ist dabei vorgesehen, dass die erste Frischwasser-Verbindungsleitung über eine vorzugsweise in der Handwaschstation integrierte, zweite Frischwasser-Verbindungsleitung mit einem insbesondere sensorgesteuerten Wasserhahn der Handwaschstation strömungsmäßig verbunden ist.

Selbstverständlich kommen aber auch andere Ausführungsformen zum Ausbilden einer fluidtechnischen Reihenschaltung der Handwaschstationen in Frage.

Gemäß denkbaren Ausführungsformen ist vorgesehen, dass die mindestens eine Handwaschstation eine Bypass-Leitung aufweist zum bedarfsweisen strömungsmäßigen Verbinden der erste Frischwasser-Verbindungsleitung mit der ersten Abwasser-Verbindungsleitung. Mit Hilfe einer solchen Bypass-Leitung kann erreicht werden, dass der Handwaschstation stets nur geeignet temperiertes Frischwasser zum Händewaschen zugeführt wird. Sollte beispielsweise aufgrund extremer Sonneneinstrahlung das in dem Frischwassertank der Versorgungsstation zwischengespeicherte Frischwasser zu heiß werden, wird vorzugsweise automatisch die Bypass-Leitung strömungsmäßig freigeschaltet, so dass das nicht geeignet temperierte Frischwasser nicht dem Wasserhahn der Handwaschstation zugeführt, sondern direkt der Abwasser-Verbindungsleitung zugeführt wird.

Alternativ hierzu ist es aber auch denkbar, dass bedarfsweise ein Bypass von der ersten Frischwasserzufuhrleitung zu der Abwasserleitung vorgesehen wird, beispielsweise durch manuelles Verbinden des zweiten Frischwasserleitungsanschlusses und des zweiten Abwasserleitungsanschlusses. Vorzugsweise ist der Bypass nur an der letzten Handwaschstation manuell anbringbar. Insbesondere sollte der Bypass einen integrierten Rückflussverhinderer ("Waterbreak") haben, um Frischwasser- und Abwasserströme zu trennen.

Gemäß einem weiteren Aspekt der vorliegenden Erfindung weist das erfindungsgemäße mobile Handwaschsystem mindestens zwei freistehende Handwaschstationen und vorzugsweise eine flexibel wählbare Anzahl an (mehreren) Handwaschstationen auf. Dabei sind die mindestens zwei Handwaschstationen derart strömungsmäßig in Reihe geschaltet, dass eine erste der mindestens zwei Handwaschstationen über die erste Abwasserleitung direkt mit dem Abwasser- oder Grauwassertank der Versorgungsstation und eine zweite der mindestens zwei Handwaschstationen über eine dritte Abwasserleitung mit der ersten der mindestens zwei Handwaschstationen und von dort über die erste Abwasserleitung mit dem Abwasser- oder Grauwassertank der Versorgungsstation strömungsmäßig verbunden oder verbindbar ist.

Hierbei handelt es sich um eine besonders effiziente aber dennoch leicht realisierbare Lösung zur fluidtechnischen Reihenschaltung der entsprechenden Handwaschstationen. Die Erfindung ist selbstverständlich nicht auf diese Lösung beschränkt.

Gemäß einer Weiterbildung des zuletzt genannten Aspekts ist vorgesehen, dass jede Handwaschstation einen ersten Leitungsanschluss für die erste oder eine dritte Abwasserleitung und einen zweiten Leitungsanschluss für eine dritte Abwasserleitung aufweist. Vorzugsweise ist in diesem Zusammenhang vorgesehen, dass jedem Leitungsanschluss eine Verschlusssicherung insbesondere in Gestalt eines Rückflussverhinderers zugeordnet ist zum vorzugsweise selbsttätigen Schließen (beispielsweise mit Hilfe eines Rückschlagventils) oder zum manuellen Schließen (beispielsweise mit Hilfe eines Kugelhahns) des entsprechenden Leitungsanschlusses, wenn keine Abwasserleitung an dem entsprechenden Leitungsanschluss angeschlossen ist.

Selbstverständlich sind aber auch andere Ausführungsformen zum Realisieren einer entsprechenden fluidtechnischen Reihenschaltung der einzelnen Handwaschstationen denkbar.

Gemäß einer bevorzugten Weiterbildung des erfindungsgemäßen Handwaschsystems und insbesondere des zuletzt genannten Aspekts des erfindungsgemäßen Handwaschsystems ist vorgesehen, dass der erste Leitungsanschluss über eine vorzugsweise in der Handwaschstation integrierte, erste Abwasser-Verbindungsleitung mit dem zweiten Leitungsanschluss strömungsmäßig verbunden ist. Dabei sollte insbesondere die erste Abwasser-Verbindungsleitung über eine vorzugsweise in der Handwaschstation integrierte, zweite Abwasserleitung mit einem Waschbecken der Handwaschstation strömungsmäßig verbunden sein.

Auch hier gilt das zuvor Gesagte: selbstverständlich sind auch andere Ausführungsformen für eine fluidtechnische Reihenschaltung der einzelnen Handwaschstationen des erfindungsgemäßen Handwaschsystems denkbar.

In diesem Zusammenhang bietet es sich an, dass die mindestens eine Handwaschstation einen Bypass aufweist zum bedarfsweisen strömungsmäßigen Verbinden des zweiten Leitungsanschlusses für die dritte Frischwasserzufuhrleitung mit dem zweiten Leitungsanschluss für die dritte Abwasserleitung. Vorzugsweise ist der Bypass nur an der letzten Handwaschstation manuell anbringbar. Insbesondere sollte der Bypass einen integrierten Rückflussverhinderer ("Waterbreak") haben, um Frischwasser- und Abwasserströme zu trennen.

Gemäß Ausführungsformen des mobilen Handwaschsystems ist vorgesehen, dass die Versorgungsstation eine Frischwasserpumpe aufweist zum Aufbauen und Halten eines vorab festgelegten oder festlegbaren Wasserdrucks in dem Frischwassertank der (freistehenden) Versorgungsstation.

Alternativ oder zusätzlich hierzu kann die Versorgungsstation eine Frischwasserpumpe aufweisen zum Aufbauen und/oder Halten eines vorab festgelegten oder festlegbaren Wasserdrucks in der ersten Frischwasserzufuhrleitung.

Alternativ oder zusätzlich hierzu ist gemäß Weiterbildungen des erfindungsgemäßen mobilen Handwaschsystems vorgesehen, dass die Versorgungsstation eine Abwasserpumpe aufweist, welche saugseitig mit der ersten Abwasserleitung strömungsmäßig verbunden oder verbindbar ist, und welche druckseitig mit der zweiten Abwasserleitung strömungsmäßig verbunden oder verbindbar ist.

Alternativ oder zusätzlich hierzu kann die Versorgungsstation eine Abwasserpumpe aufweisen, welche saugseitig mit dem Abwasser- oder Grauwassertank strömungsmäßig verbunden oder verbindbar ist, und welche druckseitig mit der zweiten Abwasserleitung strömungsmäßig verbunden oder verbindbar ist.

Auf diese Weise ist es möglich, sämtliche die Frischwasserversorgung und Abwasserentsorgung betreffenden Komponenten in der freistehenden Versorgungsstation zu integrieren, und insbesondere nicht in den freistehenden Handwaschstationen vorzusehen. Selbstverständlich kommen aber auch hier alternative und andere Ausführungsformen in Frage.

Gemäß einem Aspekt der vorliegenden Erfindung ist der Frischwassertank der Versorgungsstation zumindest bereichsweise oberhalb des Abwasser- oder Grauwassertanks der Versorgungsstation angeordnet. Dabei ist ferner eine Bypass-Leitung mit einem vorzugsweise manuell betätigbaren oder über eine Steuereinrichtung ansteuerbaren Ventil vorgesehen, um bedarfsweise eine strömungsmäßige Verbindung zwischen dem Frischwassertank und dem Abwasser- oder Grauwassertank der Versorgungsstation auszubilden. Dies ist beispielsweise dann erforderlich, wenn das mobile Handwaschsystem abzubauen ist und der Frischwassertank der Versorgungsstation entsprechend zu entleeren ist. Der Abwasser- oder Grauwassertank der Versorgungsstation wird durch Aktivieren der Abwasserpumpe der Versorgungsstation geleert.

Im Hinblick auf die Versorgungsstation des erfindungsgemäßen mobilen Handwaschsystems ist es von Vorteil, dass dem Frischwassertank der Versorgungsstation ein Niveau-Sensor zugeordnet ist, welcher mit einer Steuereinrichtung der Versorgungsstation signaltechnisch verbunden ist, wobei die Steuereinrichtung ausgebildet ist, bei Erreichen oder Unterschreiten eines mit Hilfe des Niveau-Sensors erfassten und vorab festgelegten oder festlegbaren Flüssigkeitsniveaus in dem Frischwassertank eine strömungsmäßige Verbindung des Frischwassertanks über die zweite Frischwasserzufuhrleitung mit dem Frischwasserversorgungssystem herzustellen.

Alternativ oder zusätzlich hierzu bietet es sich an, dass auch dem Abwasser- oder Grauwassertank der Versorgungsstation ein entsprechender Niveau-Sensor zugeordnet ist, welcher mit einer Steuereinrichtung der Versorgungsstation signaltechnisch verbunden ist. Dabei sollte die Steuereinrichtung insbesondere ausgebildet sein, bei Erreichen oder Überschreiten eines mit Hilfe des Niveau-Sensors erfassten und vorab festgelegten oder festlegbaren Flüssigkeitsniveaus in dem Abwasser- oder Grauwassertank eine strömungsmäßige Verbindung des Abwasser- oder Grauwassertanks über die zweite Abwasserleitung mit dem Abwasser-Entsorgungs- oder Abwasser-Aufbereitungssystem herzustellen.

Wie bereits eingangs ausgeführt, ist das Frischwasserversorgungssystem insbesondere ein von dem öffentlichen Frischwassernetz getrenntes Frischwasserversorgungssystem. Beispielsweise handelt es sich bei dem Frischwasserversorgungssystem um ein bordinternes Trinkwasserversorgungssystem eines Schiffs, insbesondere Kreuzfahrtschiffs.

In gleicher Weise ist vorzugsweise vorgesehen, dass das Abwasser-Entsorgungs- oder Abwasser-Aufbereitungssystem ein von dem örtlichen (öffentlichen) Abwassernetz getrenntes Abwasser-Entsorgungs- oder Abwasser-Aufbereitungssystem ist. Beispielsweise handelt es sich bei dem Abwasser-Entsorgungs- oder Abwasser-Aufbereitungssystem um ein bordinternes Abwasser-Entsorgungs- oder Abwasser-Aufbereitungssystem eines Schiffs, insbesondere Kreuzfahrtschiffs.

Vorzugsweise weist die mindestens eine Handwaschstation eine von der Versorgungsstation autarke Stromversorgung zur Energieversorgung der elektrischen Verbraucher der Handwaschstation auf, wobei die autarke Stromversorgung insbesondere einen Akkumulator und einen Wasserdurchflussgenerator und/oder eine Photovoltaikzelle aufweist.

Gemäß einem weiteren Aspekt der vorliegenden Erfindung ist vorgesehen, dass dem Abwasser- oder Grauwassertank der Versorgungsstation und/oder dem Frischwassertank der Versorgungsstation ein Temperatursensor zugeordnet ist zum Überwachen der Temperatur des von der mindestens einen Handwaschstation dem Abwasser- oder Grauwassertank zugeführten Abwassers bzw. zum Überwachen der Temperatur des von dem Frischwassertank der mindestens einen Handwaschstation zugeführten Frischwassers.

Der mindestens eine Temperatursensor ist vorzugsweise signaltechnisch mit einer Steuereinrichtung der Versorgungsstation verbunden, wobei die Steuereinrichtung insbesondere ausgebildet ist, eine Frischwasserzufuhr zu der mindestens einen Handwaschstation zu unterbrechen oder zu verhindern, wenn die von dem Temperatursensor erfasste Temperatur des Frischwassers in dem Frischwassertank und/oder die Temperatur des Abwassers in dem Abwasser- oder Grauwassertank einen vorab festgelegten oder festlegbaren Wert von insbesondere etwa 40°C erreicht oder überschreitet.

Schließlich ist gemäß Weiterbildungen des erfindungsgemäßen mobilen Handwaschsystems vorgesehen, dass dem Frischwassertank der Versorgungsstation eine Temperiereinrichtung (Heiz- und/oder Kühleinrichtung) zugeordnet ist, um die in dem Frischwassertank aufgenommene Flüssigkeit (Frischwasser) auf einen vorab festgelegten oder festlegbaren Temperaturwert oder Temperaturbereich geeignet zu temperieren.

Nachfolgend werden unter Bezugnahme auf die beiliegenden Zeichnungen Ausführungsformen des erfindungsgemäßen mobilen Handwaschsystems näher beschrieben.

Es zeigen:
- FIG. 1: schematisch eine exemplarische Ausführungsform des erfindungsgemäßen mobilen Handwaschsystems beim Einsatz auf der Pier eines Kreuzfahrtschiffs;
- FIG. 2: schematisch ein Hydraulikschema einer exemplarischen Ausführungsform des erfindungsgemäßen mobilen Handwaschsystems bei der Anwendung bei einem Kreuzfahrtschiff;
- FIG. 3: schematisch und in einer isometrischen Ansicht eine exemplarische Ausführungsform der Versorgungsstation des erfindungsgemäßen mobilen Handwaschsystems;
- FIG. 4: schematisch die in der exemplarischen Ausführungsform der Versorgungsstation gemäß FIG. 3 zum Einsatz kommenden Komponenten;
- FIG. 5: schematisch und in einer isometrischen Ansicht eine exemplarische Ausführungsform einer Handwaschstation des erfindungsgemäßen mobilen Handwaschsystems;
- FIG. 6: schematisch und in einer Seitenansicht die Handwaschstation gemäß FIG. 5 in einer teilgeschnittenen Ansicht; und
- FIG. 7: schematisch die Handwaschstation gemäß FIG. 5 in einer Frontansicht.

Obgleich nachfolgend eine exemplarische Ausführungsform des erfindungsgemäßen mobilen Handwaschsystems 1 zum Teil im Zusammenhang mit einem Kreuzfahrtschiff 27 beschrieben wird, ist die Erfindung keinesfalls auf diesen Anwendungsbereich beschränkt.

Insbesondere eignet sich das erfindungsgemäße mobile Handwaschsystem 1 nicht nur dazu, eine Handwaschstation 3 außerhalb eines Schiffs, insbesondere Kreuzfahrtschiffs 27, bereitzustellen. Vielmehr kann selbstverständlich das erfindungsgemäße mobile Handwaschsystem 1 auch an Bord, beispielsweise vor einem Restaurant- oder Casino-Bereich eines Schiffs, insbesondere Kreuzfahrtschiffs 27, eingesetzt werden.

Auch eignet sich das erfindungsgemäße mobile Handwaschsystem 1 für komplett andere Anwendungen, beispielsweise für Konzerte oder andere Veranstaltungen oder für Kongresse innerhalb eines Gebäudekomplexes. Diese Aufzählungen sind selbstverständlich nicht als abschließend anzusehen.

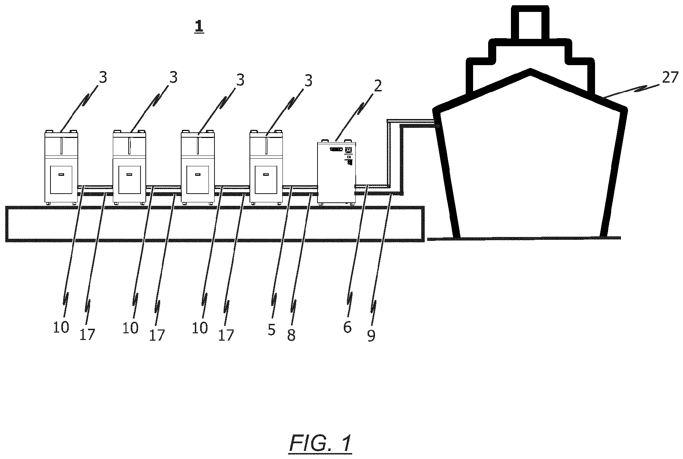

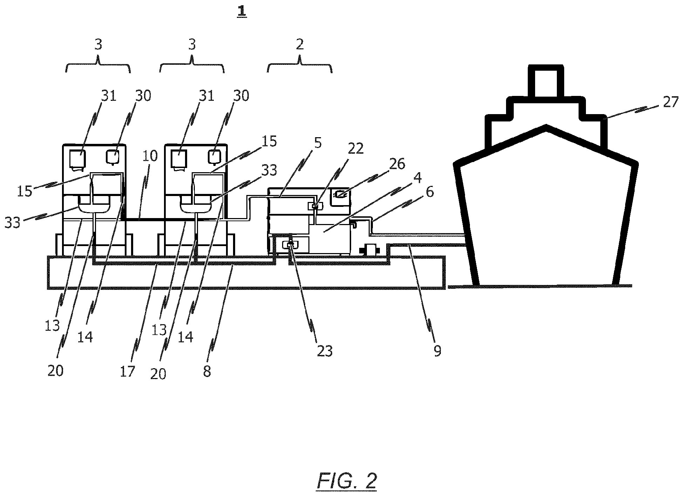

Kurz zusammengefasst weist das erfindungsgemäße mobile Handwaschsystem 1 eine Versorgungsstation 2 und eine flexibel wählbare Anzahl an Handwaschstationen 3 auf, die in Reihe geschaltet werden können und mit Frischwasser und Abwasser von der Versorgungsstation 2 bedient werden (vgl. beispielsweise FIG. 1 und FIG. 2).

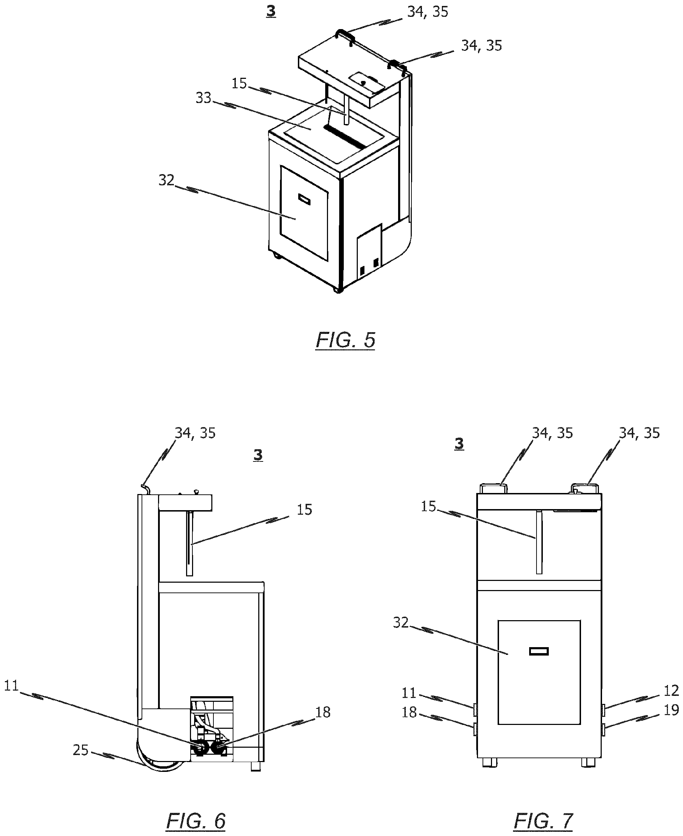

Die einzelnen Handwaschstationen 3 (vgl. beispielsweise FIG. 5 bis FIG. 7) sind vorzugsweise aus Edelstahl hergestellt und haben ein besonders äußerlich ansprechendes sowie ein einfach zu säuberndes Design. Jede einzelne Handwaschstation 3 enthält vorzugsweise einen integrierten und sensorgesteuerten Wasserhahn 15 sowie Seifenschaumspender 30, um berührungsloses Handwaschen zu ermöglichen. Außerdem ist vorzugsweise ein Papiertuchspender 31 sowie ein einfach entnehmbarer Mülleimer 32 integriert.

An der Front der Handwaschstation 3 befindet sich vorzugsweise ein großer Mülleinwurf. Seitlich sind Spritzschutz und Windschutzwände integriert, die beim Aufstellen im Freien den Wasserstrahl und die Seife vor Wind schützen. Der Ablauf des Handwaschbeckens 33 ist mit einem Gitter geschützt, um Verstopfungen vorzubeugen.

Durch einen integrierten Laser (Schutzklasse 1) werden die Positionen für den Austritt der Seife sowie des Wassers angezeigt. Sobald Seife oder Wasser aktiviert sind, leuchtet eine LED auf, um den jeweiligen Betrieb visuell zu signalisieren. Sobald das Wasser aktiviert ist, läuft ein visueller Countdown von beispielsweise 20 bis 30 Sekunden, um die Dauer des Handwaschens zu unterstützen. Der Wasserhahn 15, der Seifenspender 30, der Laser und die LED's werden durch einen gemeinsamen Akku versorgt, der durch einen Hydrogenerator (Wasserdurchflussgenerator) wieder aufgeladen wird. Der Wasserhahn 15 hat eine integrierte Dauerspülfunktion, die manuell per Knopfdruck aktiviert oder deaktiviert werden kann.

Die Handwaschstation 3 hat zwei Schwerlastrollen 25 und entsprechende Griffe 34, welche die Einheit durch Kippen fahrbar macht. Durch verstellbare Füße kann ein fester Stand jederzeit garantiert werden. Des Weiteren ist die Handwaschstation 3 mit mehreren Schwerlasthaken 35 ausgestattet, um mit einem Krahn bewegt werden zu können.

Seitlich sind vorzugsweise ausklappbare Kleiderhaken integriert, um Bekleidungsgegenstände, wie beispielsweise Jacken, etc., während des Händewaschens aufhängen zu können. Auf der Handwaschstation 3 befindet sich eine beschriftete Ablagefläche für Handtaschen, Mappen und Sonstiges.

Bei den einzelnen Handwaschstationen 3 kann das Frischwasser und das Abwasser beidseitig angeschlossen werden und entsprechend an eine weitere Handwaschstation 3 weitergeleitet werden.

Die Versorgungsstation 2 ist auf der oberen Ebene mit einem Frischwassertank 4 und einer Frischwasserpumpe 22 ausgestattet. Der Frischwassertank 4 wird mit einem bauseitigen bzw. schiffseitigen Wasseranschluss verbunden. Die Frischwasserpumpe 22 baut entsprechenden Wasserdruck für die verbundenen Handwaschstationen 3 auf.

Weiterhin hat die Versorgungsstation 2 in der unteren Ebene einen Abwassertank 7 und eine Abwasserpumpe 23, die das gesammelte Abwasser in einer Leitung zurück zu einem bauseitigen bzw. schiffseitigen Abfluss pumpt. Der Inhalt des Frischwassertanks 4 kann manuell in den Abwassertank 7 abgelassen werden. Die Frisch- und Abwasserleitungsanschlüsse 8, 9 11, 12 sind unwechselbar designt.

Die Versorgungsstation 2 hat zwei Schwerlastrollen 25 und entsprechende Griffe 34, welche die Einheit durch Kippen fahrbar machen. Durch verstellbare Füße kann ein fester Stand jeder Zeit garantiert werden. Des Weiteren ist die Versorgungsstation 2 mit mehreren Schwerlasthaken ausgestattet, um mit einem Krahn bewegt werden zu können.

Das Frischwasser und Abwasser können beidseitig angeschlossen werden. Sowohl zur Weiterleitung an die Handwaschstation 3 als auch zur bauseitigen oder schiffsseitigen Versorgung.

Eine Temperaturüberwachung im Abwassertank 7 sorgt dafür, dass bei beispielsweise über 40°C eine Notabschaltung aktiviert wird, um mögliche Verbrennungen/Verbrühungen an aufgeheiztem Wasser vorzubeugen.

Die Versorgungsstation 2 ist entsprechend der Anzahl an Handwaschstationen 3, die angeschlossen werden sollen, skalierbar.

Gemäß Ausführungsformen hat die SPS-Steuerung der Versorgungsstation 2 ein Display und kann folgende Funktionen abbilden:
- Power ein/aus;
- Not-Aus-Schalter;
- Wasserflussüberwachung;
- Leckagen-Detektor; und/oder
- visuelle Fehlerausgabe.

Durch einen Bypass an der letzten Handwaschstation 3 kann ein kontinuierlicher Wasserdurchfluss hergestellt werden. Dieser beugt vor, dass bei Nichtbenutzung der Handwaschbecken das stehende Wasser sich nicht über 40°C aufheizt, wenn das System im Freien bei hoher Sonneneinstrahlung aufgebaut ist.

Die Verbindungsleitungen/Verbindungsschläuche zwischen den einzelnen Stationen haben eine Verschlusssicherung, damit beim Abbau des Systems kein Wasser austritt. Die Verbindungsschläuche/Verbindungsleitungen können an einem Anschluss des Abwassertanks entleert werden.

Nach Benutzung des Systems kann eine Reinigungstablette in den Frischwassertank 4 eingebracht werden, um somit mit der Reinigungsfunktion der Handwaschstationen 3 das System zu reinigen.

Ein konkretes Ausführungsbeispiel des erfindungsgemäßen Handwaschsystems 1 ist schematisch in FIG. 1 dargestellt.

Kurz zusammengefasst weist das Handwaschsystem 1 eine freistehende Versorgungsstation 2 sowie eine flexible Anzahl an freistehenden Handwaschstationen 3 auf.

Wie es dem Hydraulikschema gemäß FIG. 2 entnommen werden kann, weist die Versorgungsstation 2 einen Frischwassertank 4 auf, der über eine erste Frischwasserzufuhrleitung 5 strömungsmäßig mit den Handwaschstationen 3 verbunden bzw. verbindbar ist.

Des Weiteren ist der Frischwassertank 4 der Versorgungsstation 2 über eine zweite Frischwasserzufuhrleitung 6 strömungsmäßig mit einem Frischwasserversorgungssystem verbunden oder verbindbar. Bei dem in FIG. 1 und FIG. 2 gezeigten Ausführungsbeispiel handelt es sich bei dem Frischwasserversorgungssystem um ein von dem öffentlichen Frischwassernetz getrenntes Frischwasserversorgungssystem, und insbesondere um ein bordinternes Trinkwasserversorgungssystem eines Kreuzfahrtschiffs 27.

Dem Hydraulikschema gemäß FIG. 2 ist ferner zu entnehmen, dass die Versorgungsstation 2 des Handwaschsystems 1 einen Abwasser- oder Grauwassertank 7 aufweist, der über eine erste Abwasserleitung 8 strömungsmäßig mit den Handwaschstationen 3 verbunden oder verbindbar ist, und der über eine zweite Abwasserleitung 9 strömungsmäßig mit einem Abwasser-Entsorgungs- oder Abwasser-Aufbereitungssystem verbunden oder verbindbar ist.

Wie auch das Frischwasserversorgungssystem ist das Abwasser-Entsorgungs- oder Abwasser-Aufbereitungssystem ein von dem öffentlichen Abwassernetz getrenntes Abwasser-Entsorgungs- oder Abwasser-Aufbereitungssystem und hier insbesondere ein bordinternes Abwasser-Entsorgungs- oder Abwasser-Aufbereitungssystem eines Schiffs.

Bei dem erfindungsgemäßen Handwaschsystem 1 sind die Handwaschstationen 3 derart strömungsmäßig in Reihe geschaltet, dass eine erste Handwaschstation 3 über die erste Frischwasserzufuhrleitung 5 direkt mit dem Frischwassertank 4 der Versorgungsstation 2 strömungsmäßig verbunden oder verbindbar ist, wobei eine zur ersten Handwaschstation 3 benachbarte zweite Handwaschstation 3 über eine dritte Frischwasserzufuhrleitung 10 mit der ersten Handwaschstation 3 und von dort über die erste Frischwasserzufuhrleitung 5 mit dem Frischwassertank 4 der Versorgungsstation 2 strömungsmäßig verbunden oder verbindbar ist. Eine zur zweiten Handwaschstation 3 benachbarte dritte Handwaschstation 3 ist wieder über eine dritte Frischwasserzufuhrleitung 10 mit der zweiten Handwaschstation 3 und von dort über die bereits genannte der zweiten Handwaschstation 3 zugeordnete dritte Frischwasserzufuhrleitung 10 mit der ersten Handwaschstation 3 und von dort über die erste Frischwasserzufuhrleitung 5 mit dem Frischwassertank 4 der Versorgungsstation 2 strömungsmäßig verbunden oder verbindbar.

In gleicher Weise sind im Hinblick auf die Abwasserleitung die einzelnen Handwaschstationen 3 strömungsmäßig in Reihe geschaltet. Im Einzelnen ist die erste Handwaschstation 3 über die erste Abwasserleitung 8 direkt mit dem Abwasser- oder Grauwassertank 7 der Versorgungsstation 2 strömungsmäßig verbunden oder verbindbar, wobei die zweite Handwaschstation 3 über eine dritte Abwasserleitung 17 mit der ersten Handwaschstation 3 und von dort über die erste Abwasserleitung 8 mit dem Abwasser- oder Grauwassertank 7 der Versorgungsstation 2 strömungsmäßig verbunden oder verbindbar. Die weiteren Handwaschstationen 3 sind ebenfalls über eine entsprechend zugeordnete dritte Abwasserleitung 17 strömungsmäßig mit der benachbarten Handwaschstation 3 und von dort letztendlich mit dem Abwasser- oder Grauwassertank 7 der Versorgungsstation 2 strömungsmäßig verbunden.

Wie es insbesondere der Darstellung in FIG. 6 entnommen werden kann, weist jede Handwaschstation 3 einen ersten Leitungsanschluss 11 für die erste oder eine dritte Frischwasserzufuhrleitung 10 und einen zweiten Leitungsanschluss 12 für eine dritte Frischwasserzufuhrleitung 10 auf. Insbesondere ist bei dem in den Zeichnungen dargestellten Ausführungsformen vorgesehen, dass der erste Leitungsanschluss 11 an einer ersten Seite der Handwaschstation 3 und der zweite Leitungsanschluss 12 an einer gegenüberliegenden zweiten Seite der Handwaschstation 3 ausgebildet ist, um so eine möglichst einfache Reihenschaltung der einzelnen Handwaschstationen 3 realisieren zu können.

Dem Hydraulikschema gemäß FIG. 2 kann entnommen werden, dass der erste Leitungsanschluss 11 über eine vorzugsweise in der Handwaschstation 3 integrierte, erste Frischwasser-Verbindungsleitung 13 mit dem zweiten Leitungsanschluss 12 der entsprechenden Handwaschstation 3 strömungsmäßig verbunden ist. Darüber hinaus ist die erste Frischwasser-Verbindungsleitung 13 über eine vorzugsweise in der Handwaschstation 3 integrierte, zweite Frischwasser-Verbindungsleitung 14 mit einem insbesondere sensorgesteuerten Wasserhahn 15 der Handwaschstation 3 strömungsmäßig verbunden.

Obgleich in den Zeichnungen nicht dargestellt, ist es von Vorteil, dass die Handwaschstation 3 eine Bypass-Leitung aufweist zum bedarfsweisen strömungsmäßigen Verbinden der ersten Frischwasser-Verbindungsleitung 13 mit der ersten Abwasser-Verbindungsleitung. Diese Bypass-Leitung kann bedarfsweise geöffnet werden, wenn beispielsweise die Temperatur des in dem Frischwassertank 4 der Versorgungsstation 2 zwischengespeicherten Frischwassers insbesondere aufgrund intensiver Sonneneinstrahlung sich zu stark erhitzt hat, so dass dieses Frischwasser nicht mehr zum Händewaschen verwendet werden kann, da ansonsten Verbrühungen entstehen könnten.

Das Aktivieren der Bypass-Leitung erfolgt vorzugsweise automatisch über eine Steuereinrichtung der Versorgungsstation 2.

Der Darstellung in FIG. 6 kann ebenfalls entnommen werden, dass jede Handwaschstation 3 einen ersten Leitungsanschluss 18 für die erste oder eine dritte Abwasserleitung 8, 17 und einen zweiten Leitungsanschluss 19 für eine dritte Abwasserleitung 17 aufweist. Wie auch die Leitungsanschlüsse 11, 12 für die Frischwasserzufuhrleitungen 5, 10 ist der erste Leitungsanschluss 18 für die Abwasserleitung 8, 17 an einer ersten Seite der Handwaschstation 3 und der zweite Leitungsanschluss 19 für die Abwasserleitung 17 an einer gegenüberliegenden zweiten Seite der Handwaschstation 3 angeordnet.

Grundsätzlich ist es in diesem Zusammenhang von Vorteil, dass sämtliche Leitungsanschlüsse 11, 12, 18, 19 der Handwaschstation 3 mit einer Verschlusssicherung insbesondere in Gestalt eines Rückflussverhinderers ausgerüstet sind, um den Leitungsanschluss 11, 12, 18, 19 selbsttätig zu schließen, wenn keine Leitung (Frischwasserzufuhrleitung bzw. Abwasserleitung) an dem entsprechenden Anschluss angeschlossen ist.

Dem Hydraulikschema gemäß FIG. 2 kann entnommen werden, dass der erste Leitungsanschluss 18 für die Abwasserleitung 8, 17 über eine vorzugsweise in der Handwaschstation 3 integrierte erste Abwasser-Verbindungsleitung mit dem zweiten Leitungsanschluss 19 für die Abwasserleitung 17 strömungsmäßig verbunden ist. Die erste Abwasser-Verbindungsleitung ist über eine vorzugsweise an der Handwaschstation 3 integrierte, zweite Abwasser-Verbindungsleitung 20 mit einem Waschbecken 33 der Handwaschstation 3 strömungsmäßig verbunden.

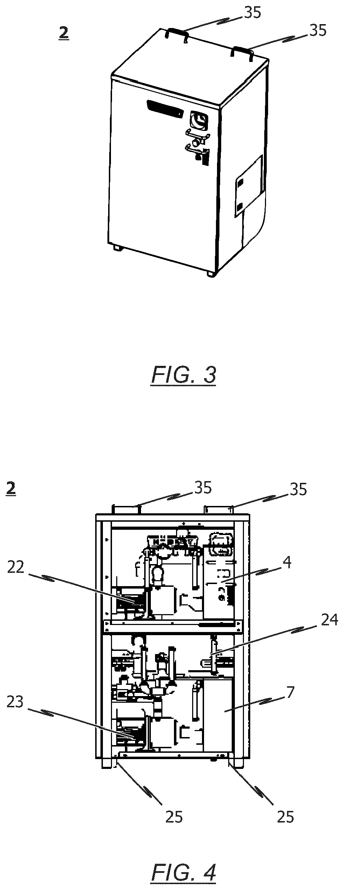

Gemäß der Darstellung in FIG. 4 weist die Versorgungsstation 2 eine Frischwasserpumpe 22 auf zum Aufbauen und Halten eines vorab festgelegten oder festlegbaren Wasserdrucks in dem Frischwassertank 4 der Versorgungsstation 2.

Des Weiteren weist die Versorgungsstation 2 eine Abwasserpumpe 23 auf, welche saugseitig mit der ersten Abwasserleitung 8 strömungsmäßig verbunden oder verbindbar ist, und welche druckseitig mit der zweiten Abwasserleitung 9 strömungsmäßig verbunden oder verbindbar ist.

Insbesondere ist bei dem Ausführungsbeispiel vorgesehen, dass der Frischwassertank 4 der Versorgungsstation 2 zumindest bereichsweise oberhalb des Abwasser- oder Grauwassertanks 7 der Versorgungsstation 2 angeordnet ist. Ferner ist eine Bypass-Leitung 24 mit einem vorzugsweise manuell betätigbaren oder über eine Steuereinrichtung 26 ansteuerbaren Ventil vorgesehen zum bedarfsweisen Ausbilden einer strömungsmäßigen Verbindung zwischen dem Frischwassertank 4 und dem Abwasser- oder Grauwassertank 7 der Versorgungsstation 2.

Insbesondere ist erfindungsgemäß vorgesehen, dass die Versorgungsstation 2 und die jeweiligen Handwaschstationen 3 jeweils als mobile Einheiten ausgebildet und insbesondere mit Schwerlastrollen oder Schwerlasträdern 25 versehen sind. Auf diese Weise lassen sich die einzelnen Einheiten des Handwaschsystems 1 leicht und insbesondere auch manuell auf- und wieder abbauen.

Vorzugsweise ist dem Frischwassertank 4 der Versorgungsstation 2 ein Niveau-Sensor zugeordnet, welcher mit einer Steuereinrichtung 26 der Versorgungsstation 2 signaltechnisch verbunden ist. Insbesondere ist dabei die Steuereinrichtung 26 ausgebildet, bei Erreichen oder Unterschreiten eines mit Hilfe des Niveau-Sensors erfassten und vorab festgelegten oder festlegbaren Flüssigkeitsniveaus in dem Frischwassertank 4 über die zweite Frischwasserzufuhrleitung 6 eine strömungsmäßige Verbindung zwischen dem Frischwassertank 4 und dem Frischwasserversorgungssystem herzustellen.

In gleicher Weise bietet es sich an, dass dem Abwasser- oder Grauwassertank 7 der Versorgungsstation 2 ein Niveau-Sensor zugeordnet ist, welcher mit einer Steuereinrichtung 26 der Versorgungsstation 2 signaltechnisch verbunden ist, wobei die Steuereinrichtung 26 insbesondere ausgebildet ist, bei Erreichen oder Überschreiten eines mit Hilfe des Niveau-Sensors erfassten und vorab festgelegten oder festlegbaren Flüssigkeitsniveaus in dem Abwasser- oder Grauwassertank 7 über die zweite Abwasserleitung 9 eine strömungsmäßige Verbindung des Abwasser- oder Grauwassertanks 7 mit dem Abwasser-Entsorgungs- oder Abwasser-Aufbereitungssystem herzustellen.

Gemäß Weiterbildungen der Erfindung ist vorgesehen, dass dem Abwasser- oder Grauwassertank 7 der Versorgungsstation 2 und/oder dem Frischwassertank 4 der Versorgungsstation 2 ein Temperatursensor zugeordnet ist zum Überwachen der Temperatur des von den Handwaschstationen 3 dem Abwasser- oder Grauwassertank 7 zugeführten Abwassers bzw. zum Überwachen der Temperatur des von dem Frischwassertank 4 den Handwaschstationen 3 zugeführten Frischwassers.

Vorzugsweise ist der mindestens eine Temperatursensor signaltechnisch mit einer Steuereinrichtung 26 der Versorgungsstation 2 verbunden, wobei die Steuereinrichtung 26 insbesondere ausgebildet ist, vorzugsweise automatisch oder wahlweise automatisch eine Frischwasserzufuhr zu den Handwaschstationen 3 zu unterbrechen oder zu verhindern, wenn die von dem Temperatursensor erfasste Temperatur des Frischwassers in dem Frischwassertank 4 und/oder die Temperatur des Abwassers in dem Abwasser- oder Grauwassertank 7 einen vorab festgelegten oder festlegbaren Wert von insbesondere etwa 40°C erreicht oder überschreitet.

Obgleich in den Zeichnungen nicht dargestellt, bietet es sich an, dass dem Frischwassertank 4 der Versorgungsstation 2 eine Temperiereinrichtung zugeordnet ist zum Temperieren der in dem Frischwassertank 4 aufgenommen Flüssigkeit. Bei dieser Temperiereinrichtung kann es sich beispielsweise um ein Heizelement oder um ein Kühlelement handeln.

Mit dem erfindungsgemäßen Handwaschsystem 1 wird in einer einfach zu realisierenden aber dennoch effektiven Weise die Möglichkeit des Händewaschens als wichtigste und beste Methode der Handhygiene erweitert, und zwar in Anwendungsbereichen, wo es derzeit noch nicht möglich ist. Somit trägt das erfindungsgemäße Handwaschsystem 1 zu einer verbesserten Hygienesicherheit bei.

Die mit dem erfindungsgemäßen Handwaschsystem 1 erzielbaren Vorteile lassen sich wie folgt zusammenfassen:
- einfache Mobilität, um die Aufstellung überall zu ermöglichen;
- Gewährleistung von schnellem Auf- und Abbau;
- flexibel anpassbar für eine beliebige Anzahl an Personen (tauglich auch für Großveranstaltungen mit mehreren tausend Personen);
- Unabhängigkeit von Sanitäreinrichtungen oder Versorgung vor Ort;
- robuste Bauweise, um Langlebigkeit und Nachhaltigkeit zu gewährleisten;
- berührungsloses Händewaschen; und
- einfache Lagerung durch minimierte Lagerflächen.

Die Erfindung ist nicht auf das in den Zeichnungen gezeigte konkrete Ausführungsbeispiel beschränkt, sondern ergibt sich aus einer Zusammenschau sämtlicher hierin offenbarter Merkmale.

### Bezugszeichenliste

- 1: mobiles Handwaschsystem
- 2: Versorgungsstation
- 3: Handwaschstation
- 4: Frischwassertank
- 5: erste Frischwasserzufuhrleitung
- 6: zweite Frischwasserzufuhrleitung
- 7: Abwasser- oder Grauwassertank
- 8: erste Abwasserleitung
- 9: zweite Abwasserleitung
- 10: dritte Frischwasserzufuhrleitung
- 11: erster Leitungsanschluss für Frischwasserzufuhrleitung
- 12: zweiter Leitungsanschluss für Frischwasserzufuhrleitung
- 13: erste Frischwasser-Verbindungsleitung
- 14: zweite Frischwasser-Verbindungsleitung
- 15: Wasserhahn
- 16: Bypass-Leitung der Handwaschstation
- 17: dritte Abwasserleitung
- 18: erster Leitungsanschluss für Abwasserleitung
- 19: zweiter Leitungsanschluss für Abwasserleitung
- 20: zweite Abwasser-Verbindungsleitung
- 22: Frischwasserpumpe
- 23: Abwasserpumpe
- 24: Bypass-Leitung der Versorgungsstation
- 25: Schwerlastrollen
- 26: Steuereinrichtung
- 27: Kreuzfahrtschiff
- 30: Seifenschaumspender
- 31: Papiertuchspender
- 32: Mülleimer
- 33: Waschbecken
- 34: Griff
- 35: Schwerlasthaken

## Patentansprüche

1. Mobiles Handwaschsystem (1), welches Folgendes aufweist:
- eine freistehende Versorgungsstation (2); und
- mindestens eine freistehende Handwaschstation (3),
wobei die Versorgungsstation (2) einen Frischwassertank (4) aufweist, der über eine erste Frischwasserzufuhrleitung (5) strömungsmäßig mit der mindestens einen Handwaschstation (3) verbunden oder verbindbar ist, und der über eine zweite Frischwasserzufuhrleitung (6) strömungsmäßig mit einem Frischwasserversorgungssystem verbunden oder verbindbar ist; und wobei die Versorgungsstation (2) einen Abwasser- oder Grauwassertank (7) und/oder eine Abwasserpumpe (23) aufweist, der bzw. die über eine erste Abwasserleitung (8) strömungsmäßig mit der mindestens einen Handwaschstation (3) verbunden oder verbindbar ist, und der bzw. die über eine zweite Abwasserleitung (9) strömungsmäßig mit einem Abwasser-Entsorgungs- oder Abwasser-Aufbereitungssystem verbunden oder verbindbar ist.

2. Handwaschsystem (1) nach Anspruch 1,
wobei mindestens zwei freistehende Handwaschstationen (3) vorgesehen sind, wobei die mindestens zwei Handwaschstationen (3) derart strömungsmäßig in Reihe geschaltet sind, dass eine erste der mindestens zwei Handwaschstationen (3) über die erste Frischwasserzufuhrleitung (5) direkt mit dem Frischwassertank (4) der Versorgungsstation (2) und eine zweite der mindestens zwei Handwaschstationen (3) über eine dritte Frischwasserzufuhrleitung (10) mit der ersten der mindestens zwei Handwaschstationen (3) und von dort über die erste Frischwasserzufuhrleitung (5) mit dem Frischwassertank (4) der Versorgungsstation (2) strömungsmäßig verbunden oder verbindbar ist.

3. Handwaschsystem (1) nach Anspruch 2,
wobei jede Handwaschstation (3) einen ersten Leitungsanschluss (11) für die erste oder eine dritte Frischwasserzufuhrleitung (5, 10) und einen zweiten Leitungsanschluss (12) für eine dritte Frischwasserzufuhrleitung (10) aufweist, wobei jedem Leitungsanschluss (11, 12) vorzugsweise eine Verschlusssicherung insbesondere in Gestalt eines Rückflussverhinderers zugeordnet ist zum vorzugsweisen selbsttätigen oder manuellen Schließen des Leitungsanschlusses (11, 12), wenn keine Frischwasserzufuhrleitung (5, 10) an dem entsprechenden Anschluss (11, 12) angeschlossen ist.

4. Handwaschsystem (1) nach Anspruch 3,
wobei der erste Leitungsanschluss (11) über eine vorzugsweise in der Handwaschstation (3) integrierte, erste Frischwasser-Verbindungsleitung (13) mit dem zweiten Leitungsanschluss (12) strömungsmäßig verbunden ist, und wobei die erste Frischwasser-Verbindungsleitung (13) über eine vorzugsweise in der Handwaschstation (3) integrierte, zweite Frischwasser-Verbindungsleitung (14) mit einem insbesondere sensorgesteuerten Wasserhahn (15) der Handwaschstation (3) strömungsmäßig verbunden ist.

5. Handwaschsystem (1) nach einem der Ansprüche 1 bis 4,
wobei mindestens zwei freistehende Handwaschstationen (3) vorgesehen sind, wobei die mindestens zwei Handwaschstationen (3) derart strömungsmäßig in Reihe geschaltet sind, dass eine erste der mindestens zwei Handwaschstationen (3) über die erste Abwasserleitung (8) direkt mit dem Abwasser- oder Grauwassertank (7) der Versorgungsstation (2) und eine zweite der mindestens zwei Handwaschstationen (3) über eine dritte Abwasserleitung (17) mit der ersten der mindestens zwei Handwaschstationen (3) und von dort über die erste Abwasserleitung (8) mit dem Abwasser- oder Grauwassertank (7) der Versorgungsstation (2) strömungsmäßig verbunden oder verbindbar ist.

6. Handwaschsystem (1) nach Anspruch 5,
wobei jede Handwaschstation (3) einen ersten Leitungsanschluss (18) für die erste oder eine dritte Abwasserleitung (8, 17) und einen zweiten Leitungsanschluss (19) für eine dritte Abwasserleitung (17) aufweist, wobei jedem Leitungsanschluss (18, 19) vorzugsweise eine Verschlusssicherung insbesondere in Gestalt eines Rückflussverhinderers zugeordnet ist zum vorzugsweisen selbsttätigen oder manuellen Schließen des Leitungsanschlusses (18, 19), wenn keine Abwasserleitung (8, 17) an dem entsprechenden Anschluss (18, 19) angeschlossen ist.

7. Handwaschsystem (1) nach Anspruch 6,
wobei der erste Leitungsanschluss (18) über eine vorzugsweise in der Handwaschstation (3) integrierte, erste Abwasser-Verbindungsleitung mit dem zweiten Leitungsanschluss (19) strömungsmäßig verbunden ist, und wobei die erste Abwasser-Verbindungsleitung über eine vorzugsweise in der Handwaschstation (3) integrierte, zweite Abwasser-Verbindungsleitung (20) mit einem Waschbecken (33) der Handwaschstation (3) strömungsmäßig verbunden ist.

8. Handwaschsystem (1) nach Anspruch 6 oder 7 und Anspruch 3 oder 4, wobei die mindestens eine Handwaschstation (3) einen Bypass aufweist zum bedarfsweisen strömungsmäßigen Verbinden des zweiten Leitungsanschlusses (12) für die dritte Frischwasserzufuhrleitung mit dem zweiten Leitungsanschluss (19) für die dritte Abwasserleitung (17).

9. Handwaschsystem (1) nach einem Ansprüche 1 bis 8,
wobei die Versorgungsstation (2) eine Frischwasserpumpe (22) aufweist zum Aufbauen und/oder Halten eines vorab festgelegten oder festlegbaren Wasserdrucks in dem Frischwassertank (4); und/oder wobei die Versorgungsstation (2) eine Frischwasserpumpe (22) aufweist zum Aufbauen und/oder Halten eines vorab festgelegten oder festlegbaren Wasserdrucks in der ersten Frischwasserzufuhrleitung (5); und/oder wobei die Versorgungsstation (2) eine Abwasserpumpe (23) aufweist, welche saugseitig mit der ersten Abwasserleitung (8) strömungsmäßig verbunden oder verbindbar ist, und welche druckseitig mit der zweiten Abwasserleitung (9) strömungsmäßig verbunden oder verbindbar ist; und/oder
wobei die Versorgungsstation (2) eine Abwasserpumpe (23) aufweist, welche saugseitig mit dem Abwasser- oder Grauwassertank (7) strömungsmäßig verbunden oder verbindbar ist, und welche druckseitig mit der zweiten Abwasserleitung (9) strömungsmäßig verbunden oder verbindbar ist.

10. Handwaschsystem (1) nach einem der Ansprüche 1 bis 9,
wobei der Frischwassertank (4) der Versorgungsstation (2) zumindest bereichsweise oberhalb des Abwasser- oder Grauwassertanks (7) der Versorgungsstation (2) angeordnet ist, und wobei ferner eine Bypass-Leitung (24) mit einem vorzugsweise manuell betätigbaren oder über eine Steuereinrichtung (26) ansteuerbaren Ventil vorgesehen ist zum bedarfsweisen Ausbilden einer strömungsmäßigen Verbindung zwischen dem Frischwassertank (4) und dem Abwasser- oder Grauwassertank (7) der Versorgungsstation (2).

11. Handwaschsystem (1) nach einem der Ansprüche 1 bis 10,
wobei das Frischwasserversorgungssystem ein von dem öffentlichen Frischwassernetz getrenntes Frischwasserversorgungssystem ist, und wobei das Frischwasserversorgungssystem insbesondere ein bordinternes Trinkwasserversorgungssystem eines Schiffs (27) ist; und/oder wobei das Abwasser-Entsorgungs- oder Abwasser-Aufbereitungssystem ein von dem öffentlichen Abwassernetz getrenntes Abwasser-Entsorgungs- oder Abwasser-Aufbereitungssystem ist, und wobei das Abwasser-Entsorgungs- oder Abwasser-Aufbereitungssystem insbesondere ein bordinternes Abwasser-Entsorgungs- oder Abwasser-Aufbereitungssystem eines Schiffs (27) ist.

12. Handwaschsystem (1) nach einem der Ansprüche 1 bis 11,
wobei die Versorgungsstation (2) und die mindestens eine Handwaschstation (3) jeweils als mobile Einheit ausgebildet und insbesondere mit Schwerlastrollen oder Schwerlasträdern (25) versehen sind; und/oder
wobei die mindestens eine Handwaschstation (3) eine von der Versorgungsstation (2) autarke Stromversorgung zur Energieversorgung der elektrischen Verbraucher der Handwaschstation (3) aufweist, wobei die autarke Stromversorgung insbesondere einen Akkumulator und einen Wasserdurchflussgenerator und/oder eine Photovoltaikzelle aufweist.

13. Handwaschsystem (1) nach einem der Ansprüche 1 bis 12,
wobei dem Frischwassertank (4) der Versorgungsstation (2) ein Niveau-Sensor zugeordnet ist, welcher mit einer Steuereinrichtung (26) der Versorgungsstation (2) signaltechnisch verbunden ist, wobei die Steuereinrichtung (26) ausgebildet ist, bei Erreichen oder Unterschreiten eines mit Hilfe des Niveau-Sensors erfassten und vorab festgelegten oder festlegbaren Flüssigkeitsniveaus in dem Frischwassertank (4) über die zweite Frischwasserzufuhrleitung (6) eine strömungsmäßige Verbindung des Frischwassertanks (4) mit dem Frischwasserversorgungssystem herzustellen; und/oder
wobei dem Abwasser- oder Grauwassertank (7) der Versorgungsstation (2) ein Niveau-Sensor zugeordnet ist, welcher mit einer Steuereinrichtung (26) der Versorgungsstation (2) signaltechnisch verbunden ist, wobei die Steuereinrichtung (26) ausgebildet ist, bei Erreichen oder Überschreiten eines mit Hilfe des Niveau-Sensors erfassten und vorab festgelegten oder festlegbaren Flüssigkeitsniveaus in dem Abwasser- oder Grauwassertank (7) über die zweite Abwasserleitung (9) eine strömungsmäßige Verbindung des Abwasser- oder Grauwassertanks (7) mit dem Abwasser-Entsorgungs- oder Abwasser-Aufbereitungssystems herzustellen.

14. Handwaschsystem (1) nach einem der Ansprüche 1 bis 13,
wobei dem Abwasser- oder Grauwassertank (7) der Versorgungsstation (2) und/oder dem Frischwassertank (4) der Versorgungsstation (2) ein Temperatursensor zugeordnet ist zum Überwachen der Temperatur des von der mindestens einen Handwaschstation (3) dem Abwasser- oder Grauwassertank (7) zugeführten Abwassers bzw. zum Überwachen der Temperatur des von dem Frischwassertank (4) der mindestens einen Handwaschstation (3) zugeführten Frischwassers, wobei der Temperatursensor signaltechnisch mit einer Steuereinrichtung (26) der Versorgungsstation (2) verbunden ist, und wobei die Steuereinrichtung (26) insbesondere ausgebildet ist, eine Frischwasserzufuhr zu der mindestens einen Handwaschstation (3) zu unterbrechen oder zu verhindern, wenn die von dem Temperatursensor erfasste Temperatur des Frischwassers in den Frischwassertank (4) und/oder die Temperatur des Abwassers in dem Abwasser- oder Grauwassertank (7) einen vorab festgelegten oder festlegbaren Wert von insbesondere etwa 40°C erreicht oder überschreitet.

15. Handwaschsystem (1) nach einem der Ansprüche 1 bis 14,
wobei dem Frischwassertank (4) der Versorgungsstation (2) eine Temperiereinrichtung zugeordnet ist zum Temperieren der in dem Frischwassertank (4) aufgenommenen Flüssigkeit.
